# FASCICULE DE BREVET EUROPEEN

(11) **EP 2 877 762 B1**
(45) Date de publication et mention de la délivrance du brevet: **06.07.2016**
(21) Numéro de dépôt: 13756600.6
(22) Date de dépôt: 25.07.2013
(51) Int. Cl.: F16K 1/226, F16K 11/052, F02M 26/70

(54) **VANNE DE CONTROLE MOTEUR A FONCTIONNEMENT AMELIORE**
MOTORSTEUERUNGSVENTIL MIT VERBESSERTEM BETRIEB
ENGINE-CONTROL VALVE HAVING IMPROVED OPERATION

(30) Priorité: 26.07.2012 FR 1257251
(43) Date de publication de la demande: 03.06.2015
(73) Titulaire: Valeo Systèmes de Contrôle Moteur, 95800 Cergy (FR)
(72) Inventeur: HODEBOURG, Grégory, F-78500 Sartrouville (FR)
(74) Mandataire: Garcia, Christine
(86) Numéro de dépôt international: PCT/FR2013/051803
(87) Numéro de publication internationale: WO 2014/016527

(56) Documents cités:
- EP-A2- 0 135 284
- DE-A1- 19 718 862
- FR-A1- 2 962 182
- FR-A2- 2 394 000
- US-A- 4 286 769
- US-A- 4 289 296
- US-A- 4 796 857

## Description

L'invention se rapporte à une vanne de contrôle moteur à fonctionnement amélioré. Ce type de vanne peut, par exemple, équiper un circuit d'alimentation en gaz d'un moteur thermique de véhicule, pour réguler le débit des gaz EGR (Exhaust Gas Recirculation) dans une boucle permettant de ponctionner une partie des gaz d'échappement en sortie de moteur, pour les réinjecter en amont dudit moteur. Le principe de fonctionnement de ce type de vanne repose sur la rotation commandée d'un volet, pouvant passer d'une position d'ouverture complète pour laisser passer des gaz fluide, à une position de fermeture pour bloquer ce passage. L'invention a pour objet une vanne de contrôle moteur à fonctionnement amélioré.

Une vanne de contrôle moteur possède donc un volet, qui est monté pivotant sur un axe de rotation. Ledit axe peut séparer le volet en une première partie et en une deuxième partie. Lorsque ce volet se retrouve dans une position de fermeture, il vient au contact d'un joint solidaire du corps de la vanne, ledit joint assurant l'étanchéité de la vanne en agissant alors comme une butée de positionnement dudit volet. Plus spécifiquement, le joint est globalement plan, et est fixé dans le corps de la vanne, en étant inséré au niveau de son pourtour entre deux éléments dudit corps. Ces éléments sont par exemple en fonderie. Le joint possède une ouverture, et lorsque le volet est en position de fermeture, la première partie du volet vient au contact de l'une des deux faces du joint pour obturer ladite ouverture, tandis que la deuxième partie dudit volet vient affleurer l'autre face dudit joint. Le volet est de faible épaisseur et possède généralement une forme sensiblement rectangulaire.

Dans un premier temps, pour des raisons liées à sa fabrication, le joint ne recouvrait que trois des quatre arêtes périphériques dudit volet, laissant subsister un passage potentiel pour les gaz au niveau de la quatrième arête du volet, qui est non recouverte par ledit joint. Ainsi, lorsque le volet est en position de fermeture contre le joint, ledit passage est susceptible de favoriser une fuite inopinée des gaz. Il en résulte une étanchéité assez médiocre de ladite vanne en configuration de fermeture.

Dans un deuxième temps, une solution pour remédier à cette étanchéité de mauvaise qualité a consisté à fabriquer un joint, soit en une seule partie, soit en deux parties, le joint étant suffisamment étendu pour recouvrir pleinement les quatre arêtes périphériques du volet, et ainsi limiter les sources de fuite, FR 2962182 décrit une telle vanne. Or, en se référant à la figure 1, un problème régulièrement rencontré avec ce type de joint 1 étendu est qu'il est soumis à la fois à une pression et une température élevées de la part des gaz présents dans la vanne, et qu'il va donc avoir tendance à se déformer sous l'effet d'une dilatation thermique. Puisqu'il est inséré au niveau de son bord externe 2, entre deux éléments de fonderie, la déformation va essentiellement se porter sur la partie centrale 3 du joint 1, avec la création de creux 4 et/ou de bosses, susceptibles de constituer des passages de fuite pour les gaz situés dans la vanne. De plus, dans le cas où le joint 1 se déforme en créant des creux 4, il risque de constituer une butée de blocage artificielle pour le volet, et donc d'entraver son pivotement pour venir au contact dudit joint 1, afin d'assurer la fermeture de la vanne. Autrement dit, la déformation du joint risque d'entraver le mécanisme de fonctionnement de la vanne.

L'invention a pour objet, selon l'un de ses aspects, une vanne de contrôle moteur, présentant un corps délimitant un conduit interne et comprenant un volet monté pivotant par un axe, ledit volet comprenant une première partie et étant apte à pivoter entre une position d'ouverture permettant le passage de gaz dans le conduit, et une position de fermeture empêchant ce passage et pour laquelle le volet vient en contact avec un joint, notamment plan, inséré entre deux éléments du corps de la vanne, ledit joint présentant un contour extérieur entourant extérieurement le contour extérieur du volet et ledit joint comprenant une ouverture et une portion pleine, ladite première partie venant obturer l'ouverture du joint lorsque le volet est dans une position de fermeture,
l'un des deux éléments du corps étant doté d'une protubérance de soutien, positionnée dans la vanne de manière à être au contact de la portion pleine du joint.

Une vanne de contrôle moteur selon l'invention met en oeuvre un joint étendu recouvrant intégralement le volet, et un corps conformé pour empêcher le joint de se déformer sous l'effet d'une température et d'une pression élevées des gaz. De cette manière, une vanne de contrôle moteur selon l'invention aura un fonctionnement satisfaisant, quelle que soit la température et la pression des gaz circulant à travers ladite vanne, sans risque de voir son volet se bloquer en rotation sous l'effet de la déformation du joint.

En effet, sous l'effet de la présence de gaz chauds dans la vanne, le joint est susceptible de se déformer par dilatation thermique, et peut donc créer des passages de fuite pour lesdits gaz lorsque la vanne est fermée, et peut aussi bloquer la rotation du volet. La protubérance de soutien est de préférence configurée pour venir au contact de la partie la plus vulnérable du joint, qui est la plus sujette à déformation, afin de maintenir ladite partie dans un état de planéité satisfaisant. La protubérance est avantageusement peu encombrante afin de ne pas alourdir la vanne ni réduire les sections de passage des gaz dans ladite vanne. Cette protubérance peut agir comme une béquille de soutien du joint, configurée pour n'avoir aucune autre interaction ou influence dans la vanne. A priori, cette protubérance constitue une partie saillante de l'élément du corps, pouvant revêtir toute forme. Cette protubérance peut être constituée par le même matériau que celui de l'élément du corps, ce dernier étant notamment en fonderie, ou bien être constituée par un matériau différent. De même, cette protubérance peut être une pièce rapportée qui a été solidarisée à l'élément du corps, ou peut constituer avec ledit élément une seule et même pièce fabriquée en une seule opération.

Avantageusement, le joint est inséré entre les deux éléments, notamment de fonderie, au niveau d'une zone périphérique dudit joint. Ce type de fixation est conventionnel, car il permet à la partie centrale du joint, constituée par la portion pleine et par l'ouverture, d'interagir avec le volet pour assurer une bonne étanchéité de la vanne dans sa position de fermeture. Cependant, il engendre l'inconvénient de rendre cette partie centrale structurellement faible, puisqu'elle se retrouve sans maintien et qu'elle est susceptible de se déformer par dilatation thermique. La présence de la protubérance est donc particulièrement adaptée à cette configuration de montage.

De façon préférentielle, la protubérance de soutien fait saillie de l'élément du corps de manière à se retrouver perpendiculaire au plan défini par la portion pleine du joint. Il s'agit d'une configuration optimisée pour laquelle l'action de la protubérance sur la portion pleine du joint est la plus efficace, car elle ne favorise aucune direction de déformation particulière.

La protubérance peut faire saillie depuis une partie de l'élément du corps définissant une partie du conduit, par exemple depuis une paroi du conduit.

La protubérance peut être réalisée d'une seule pièce avec un élément du corps dont une partie définit en tout ou partie le conduit et dont une autre partie définit en tout ou partie la surface extérieure du corps. Une pièce monobloc peut ainsi définir en tout ou partie la surface extérieure du corps de la vanne, en tout ou partie la paroi du conduit, et la protubérance.

Avantageusement, la protubérance de soutien s'étend parallèlement à l'axe de rotation du volet. En effet, la fonction de maintien de la protubérance sur la portion pleine du joint doit être particulièrement marquée le long d'une direction parallèle à l'axe de rotation, alors qu'il n'est pas nécessaire que cette fonction soit étendue le long d'une direction perpendiculaire audit axe. La protubérance peut être constituée par une seule pièce, faite en un seul bloc, ou être constituée par au moins deux parties séparées et alignées selon l'axe de rotation.

De façon avantageuse, la protubérance s'étend sur une longueur comprise entre 50% et 100% de la longueur totale de l'axe de rotation. Il n'est en effet pas nécessaire que la protubérance s'étende sur toute la longueur de l'axe pour être efficace. La longueur de cette protubérance sera déterminée en fonction de la géométrie du corps de la vanne, des dimensions et de la forme du joint, ainsi que du niveau de sollicitation engendré par les gaz chauds, en termes de pression et de température.

Préférentiellement, la zone de la portion pleine du joint qui est au contact de la protubérance de soutien est une zone qui borde l'ouverture dudit joint. En effet, cette zone précise du joint est la plus susceptible de se déformer et nécessite donc un maintien homogène pour conserver une bonne planéité.

De façon préférentielle, la portion pleine du joint est dotée d'une zone de renforcement destinée à rigidifier ladite portion, de manière à ce qu'elle ne se déforme pas par dilatation thermique. En effet, outre l'action de la protubérance de soutien, il peut être souhaitable de diminuer les risques de déformation de la portion pleine du joint, par la mise en oeuvre d'un renforcement de ladite portion. Cette zone de renforcement peut par exemple être constituée par un relief réalisé par emboutissage de la portion pleine du joint, ou par un ajout de matière comme une bande métallique de faible épaisseur. Le relief peut être faiblement étendu et ainsi être assimilable, par exemple, à une nervure de renfort.

Avantageusement, l'extrémité de la protubérance de soutien qui est au contact de la portion pleine du joint est plane. De cette manière, la surface de contact entre la protubérance et la portion pleine du joint est étalée, permettant d'accroitre la qualité du contact entre ces deux éléments et augmentant donc l'efficacité du soutien de ladite protubérance vis-à-vis de ladite portion pleine.

De façon avantageuse, la mise au contact de la protubérance avec la portion pleine du joint s'effectue sans occasionner de déformation de ladite portion. En effet, même si le contact entre la portion pleine et la protubérance doit être effectif, il doit toutefois s'effectuer avec une certaine mesure, pour ne pas provoquer une quelconque déformation de la portion pleine du joint, qui pourrait alors entraver le fonctionnement de la vanne et détériorer les conditions de contact entre la deuxième partie du volet et ladite portion pleine, lorsque le volet est en deux parties, comme mentionné ultérieurement.

Une vanne selon l'invention présente l'avantage d'être performante en matière de fonctionnement, en empêchant de façon simple et judicieuse la déformation du joint, sans notamment avoir recours à un réaménagement en profondeur de leur corps. Ladite vanne a de plus l'avantage de demeurer d'un encombrement constant par rapport aux vannes déjà existantes, puisque la protubérance de soutien vient occuper un espace déjà disponible dans la vanne. Une vanne selon l'invention possède comme autre avantage le fait de présenter une certaine modularité, car la protubérance de soutien peut adopter une multiplicité de tailles et de géométries différentes, en fonction de la configuration interne desdites vannes, de la configuration du joint, ainsi que du niveau de sollicitation que pourraient engendrer les gaz présents dans ces vannes.

Le volet peut comprendre une deuxième partie séparée de la première partie par l'axe du volet, ladite deuxième partie venant affleurer la portion pleine lorsque le volet est dans une position de fermeture.

Préférentiellement, le contact entre la protubérance de soutien et la portion pleine du joint s'effectue au niveau de la face du joint qui est opposée à celle contre laquelle la deuxième partie du volet vient en affleurement lorsque ledit volet est dans une position de fermeture.

L'invention pourra être mieux comprise à la lecture de la description qui va suivre d'un exemple non limitatif de mise en oeuvre de celle-ci et à l'examen du dessin annexé sur lequel:
- La figure 1 est une vue filaire d'un joint déformé de l'état de la technique,
- La figure 2 est une vue schématique en coupe d'un joint, d'un volet et d'une protubérance de soutien d'une vanne selon un exemple de mise en oeuvre de l'invention, ledit volet étant dans une position d'ouverture,

Une vanne de contrôle moteur selon l'invention peut par exemple être une vanne EGR (de l'anglais Exhaust Gas Recirculation), régulant le débit des gaz dans une bouclé reliant un circuit d'échappement à un circuit d'admission d'air d'un moteur thermique de véhicule.

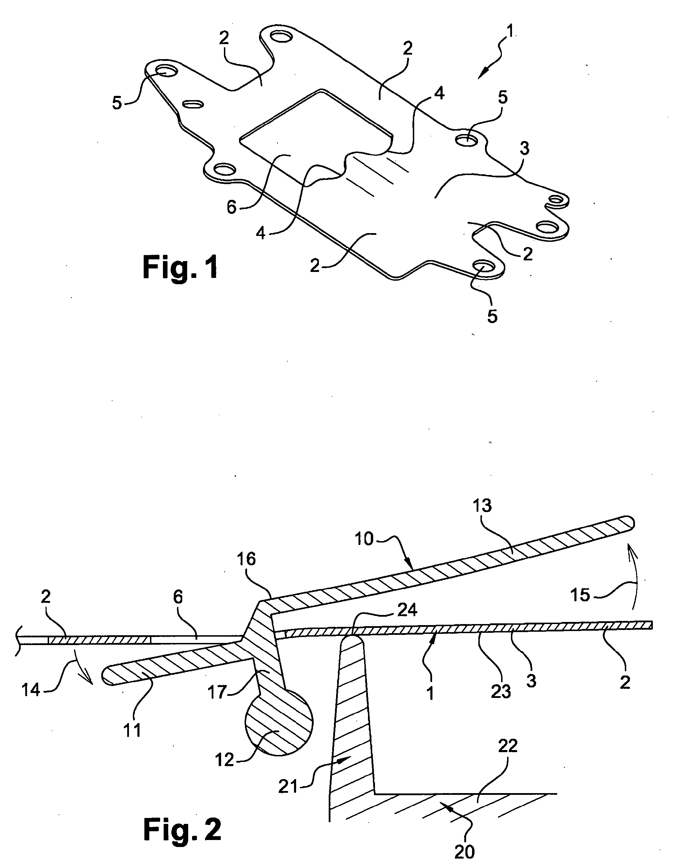

En se référant à la figure 1, un joint 1 de l'état de la technique est en inox rigide, et il est inséré au niveau de sa zone périphérique 2 entre deux éléments 20 du corps de la vanne. Ces éléments 20 sont par exemple des éléments de fonderie 20 et ils peuvent être en aluminium, en fonte ou en inox. Cette zone périphérique 2 comporte ainsi un certain nombre d'orifices 5, destinés à être traversés par des vis pour fixer le joint 1 entre lesdits éléments de fonderie 20. Ce joint 1 est plan, de forme sensiblement rectangulaire et de faible épaisseur, et possède une portion pleine 3 et une ouverture 6 de passage pour les gaz, ladite portion 3 et ladite ouverture 6 constituant la partie centrale dudit joint 1.

En se référant à la figure 2, une vanne selon un exemple de mise en oeuvre de l'invention comprend un conduit interne et fonctionne avec un volet 10 mobile en rotation, entre une position de complète ouverture, pour laquelle il permet le passage des gaz dans le conduit avec un débit maximal, et une position de fermeture pour laquelle il obture entièrement ledit conduit. Le volet 10 est globalement rectangulaire et comporte dans l'exemple considéré une première 11 et une deuxième partie 13 rectangulaires, situées de part et d'autre d'un axe 12 de rotation, lesdites parties 11 étant planes, en continuité l'une de l'autre, et étant fixées l'une à l'autre de façon rigide.

De façon plus précise, la première partie 10 et la deuxième partie 13 se rejoignent au niveau d'un plan d'interface 16, ledit volet 10 étant doté d'un bras de levier 17 prenant naissance au niveau dudit plan d'interface 16 et se terminant par l'axe de rotation 12. Ce bras de levier 17 est sensiblement perpendiculaire au plan du volet 10 constitué par la première 11 et la deuxième 13 parties. Préférentiellement, le volet 10 est en inox.

Le volet 10 de l'exemple décrit est monté en rotation dans la vanne, de manière à ce qu'en position de fermeture, la première partie 11 du volet 10 obture l'ouverture 6 en venant au contact d'une face dudit joint 1, et de manière à ce que la deuxième partie 13 du volet 10 affleure la face opposée dudit joint 1 au niveau de la portion pleine 3. L'axe de rotation 12 du volet 10 est placé au droit de l'ouverture 6 du joint 1, au niveau de la zone de ladite ouverture 6 la plus proche de la zone pleine 3 du joint 1.

Lorsque le volet 10 s'ouvre pour laisser passer les gaz, les deux parties 11,13 pivotent simultanément dans le sens indiqué par les deux flèches 14,15 pour s'écarter de la face du joint 1 contre laquelle elles étaient en appui ou en affleurement. Dans cette configuration, la première partie 11 du volet 10 libère l'ouverture 6 du joint 10, pour assurer le passage des gaz dans le conduit. Il est à noter que la rotation du volet 10 est commandée, et que ledit volet peut être figé dans une multiplicité de positions intermédiaires situées entre la position de fermeture et la position de complète ouverture.

En se référant à la figure 1, le joint 1 d'une vanne selon l'exemple décrit de mise en oeuvre de l'invention est réalisé en une seule pièce, et est étendu de manière à pouvoir recouvrir les quatre arêtes périphériques du volet 10. Lorsque ce joint 1 n'est pas maintenu, il possède une zone centrale structurellement faible, qui est susceptible de se déformer sous l'effet conjugué de la pression et de la température élevées des gaz. En effet, puisque le joint 1 est fixé à sa périphérie 2, seule sa partie centrale, qui n'est pas bridée en mouvement, va subir les effets d'une dilatation thermique. Cette déformation peut conduire le joint 1 à se gondoler, en créant des creux 4 au niveau de la partie pleine 3 bordant l'ouverture 6. Or, un joint 1 déformé présentant des creux 4 peut entraver le mécanisme de rotation du volet 10 dans la vanne, en venant en appui contre le bras de levier 17 dudit volet 10 et en bloquant donc sa rotation.

En se référant à la figure 2, l'un des deux éléments 20, ici de fonderie, du corps de la vanne permet d'éviter une déformation de ce joint 1, en étant doté d'une protubérance de soutien 21, dimensionnée pour venir au contact de la portion pleine 3 du joint 1. Cette protubérance 21 prend naissance au niveau d'une embase 22 de l'élément de fonderie 20 et saille de ladite embase 22 selon une direction qui permet à ladite protubérance 21 de se retrouver perpendiculaire au plan de surface de la portion pleine 3 du joint 1. L'extrémité 24 de la protubérance 21, qui vient au contact de la portion pleine 3 du joint 1, est dans l'exemple considéré plane, de façon à établir un contact plan avec ladite portion pleine 3. Ce contact s'effectue au niveau de la face 23 du joint 1 qui est opposée à celle contre laquelle la deuxième partie 13 du volet 10 vient en affleurement, lorsque ledit volet 10 est dans une position de fermeture. Cette protubérance 21 a notamment une forme parallélépipédique rectangle, dont l'axe longitudinal est parallèle à l'axe de rotation 12 du volet 10.

La longueur de cette protubérance est par exemple égale à 75% de la longueur totale de l'axe de rotation 12, ladite protubérance étant positionnée de façon centrale par rapport audit axe 12 de rotation. Cette protubérance de soutien 21 vient au contact de la portion pleine 3 du joint 1, qui borde l'ouverture 6, l'interface de contact entre ladite protubérance 21 et ladite portion pleine 3 est située en léger retrait de l'extrémité de ladite portion 3 qui délimite ladite ouverture 6. Ladite protubérance 21 assure un contact avec le joint 1, sans engendrer la moindre déformation de la portion pleine 3 dudit joint, laissant le joint 1 dans un état de parfaite planéité. La protubérance 21 est de préférence dimensionnée au plus juste, pour pouvoir assurer sa fonction de maintien du joint 1 avec efficacité, mais sans entraver la rotation du volet 10 ni influencer le passage des gaz à travers la vanne. De même, cette protubérance 21 ne doit avantageusement pas contribuer à alourdir significativement la vanne.

Selon un autre exemple non représenté de mise en oeuvre de l'invention, , la portion pleine 3 du joint 1 peut être dotée d'une zone de renforcement venant en complément de la protubérance de soutien 21, pour empêcher une déformation du joint 1 par dilatation thermique; comme décrit dans la demande française déposée par la Demanderesse le 4 juillet 2012 sous le numéro 12 56390 et dont le contenu est incorporé à la présente demande par référence.

En effet, la protubérance 21 va empêcher la déformation du joint 1 dans un sens, et la zone de renforcement va limiter, voire annuler, la déformation dudit joint 1 dans l'autre sens. Cette zone de renforcement peut être constituée par un ajout de matière, sous la forme par exemple d'une bande métallique de très faible épaisseur qui serait soudée à la portion pleine 3 du joint 1. Elle peut également être constituée par un relief de la portion pleine 3 du joint 1, réalisé par emboutissage, ce relief pouvant préférentiellement être assimilable à une nervure.

La bande métallique ajoutée ou la nervure s'étend notamment parallèlement à l'axe de rotation 12 du volet 10 et est située au niveau de la portion pleine 3 du joint bordant l'ouverture 6. L'interface de contact entre la protubérance 21 de soutien et la portion pleine 3 du joint 1 peut chevaucher, au moins partiellement, la zone de renforcement dudit joint 1 constituée par la bande métallique ajoutée ou la nervure.

## Revendications

1. Vanne de contrôle moteur, présentant un corps délimitant un conduit interne et comprenant un volet (10) monté pivotant par un axe (12), ledit volet (10) comprenant une première partie (11) et étant apte à pivoter entre une position d'ouverture permettant le passage de gaz dans le conduit, et une position de fermeture empêchant ce passage et pour laquelle le volet (10) vient en contact avec un joint (1) inséré entre deux éléments du corps de la vanne, ledit joint (1) présentant un contour extérieur entourant extérieurement le contour extérieur du volet (10) et ledit joint comprenant une ouverture (6) et une portion pleine (3), ladite première partie (11) venant obturer l'ouverture (6) du joint (1) lorsque le volet (10) est dans une position de fermeture, le volet (10) comprenant une deuxième partie (13) séparée de la première partie (11) par l'axe (12) du volet (10), ladite deuxième partie venant affleurer la portion pleine (3) lorsque le volet est dans une position de fermeture, **caractérisée en ce que**
l'un des deux éléments (20) du corps est doté d'une protubérance (21) de soutien, positionnée dans la vanne de manière à être au contact de la portion pleine (3) du joint (1).

2. Vanne selon la revendication 1, le joint (1) étant inséré entre les deux éléments (20) du corps au niveau d'une zone périphérique (2) dudit joint (1).

3. Vanne selon la revendication 1 ou 2, la protubérance (21) de soutien faisant saillie de l'élément (20) du corps de manière à se retrouver perpendiculaire au plan défini par la portion pleine (3) du joint (1).

4. Vanne selon l'une quelconque des revendications 1 à 3, la protubérance (21) de soutien s'étendant parallèlement à l'axe de rotation (12) du volet (10).

5. Vanne selon la revendication 4, la protubérance (21) s'étendant sur une longueur comprise entre 50% et 100% de la longueur totale de l'axe de rotation (12).

6. Vanne selon l'une quelconque des revendications 1 à 5, la zone de la portion pleine (3) du joint (1) qui est au contact de la protubérance (21) de soutien étant une zone qui borde l'ouverture (6) dudit joint (1).

7. Vanne selon l'une quelconque des revendications 1 à 6, la portion pleine (3) du joint (1) étant dotée d'une zone de renforcement destinée à rigidifier ladite portion (3), de manière à ce qu'elle ne se déforme pas par dilatation thermique.

8. Vanne selon l'une quelconque des revendications 1 à 7, l'extrémité (24) de la protubérance (21) de soutien qui est au contact de la portion pleine (3) du joint (1) étant plane.

9. Vanne selon l'une quelconque des revendications 1 à 8, la mise au contact de la protubérance (21) avec la portion pleine (3) du joint (1) s'effectuant sans occasionner de déformation de ladite portion (3).

10. Vanne selon l'une quelconque des revendications 1 à 9, le contact entre la protubérance (21) de soutien et la portion pleine (3) du joint s'effectuant au niveau de la face (23) du joint (1) qui est opposée à celle contre laquelle la deuxième partie (13) du volet (10) vient en affleurement lorsque ledit volet (10) est dans une position de fermeture.

11. Vanne selon l'une quelconque des revendications 1 à 10, la protubérance (21) étant réalisée d'une seule pièce avec ledit élément (20) du corps, une partie de cet élément (20) définissant une partie du conduit et une autre partie de cet élément (20) définissant une partie de la surface extérieure du corps.

## Patentansprüche

1. Kraftmaschinensteuerventil, das einen Körper aufweist, der eine innere Leitung begrenzt, und eine um eine Welle (12) schwenkbar montierte Klappe (10) umfasst, wobei die Klappe (10) einen ersten Teil (11) aufweist und zwischen einer geöffneten Position, in der der Durchgang von Gas in die Leitung möglich ist, und einer geschlossenen Position, die diesen Durchgang verhindert und in der die Klappe (10) in Kontakt mit einer Dichtung (1) gelangt, die zwischen zwei Elemente des Körpers des Ventils eingefügt ist, schwenken kann, wobei die Dichtung (1) einen äußeren Umriss aufweist, der den äußeren Umriss der Klappe (10) umgibt, und wobei die Dichtung eine Öffnung (6) und einen Vollabschnitt (3) umfasst, wobei der erste Teil (11) die Öffnung (6) der Dichtung (1) verschließt, wenn die Klappe (10) in einer geschlossenen Position ist, wobei die Klappe (10) einen zweiten Teil (13) umfasst, der von dem ersten Teil (11) durch die Welle (12) der Klappe (10) getrennt ist, wobei dieser zweite Teil mit dem Vollabschnitt (3) bündig ist, wenn die Klappe in einer geschlossenen Position ist, **dadurch gekennzeichnet, dass**
eines der zwei Elemente (20) des Körpers mit einem Haltevorsprung (21) versehen ist, der in dem Ventil in der Weise positioniert ist, dass er mit dem Vollabschnitt (3) der Dichtung (1) in Kontakt ist.

2. Ventil nach Anspruch 1, wobei die Dichtung (1) zwischen die zwei Elemente (20) des Körpers auf Höhe einer Umfangszone (2) der Dichtung (1) eingefügt ist.

3. Ventil nach Anspruch 1 oder 2, wobei der Haltevorsprung (21) von dem Element (20) des Körpers in der Weise vorsteht, dass er senkrecht zu der durch den Vollabschnitt (3) der Dichtung (1) definierten Ebene vorhanden ist.

4. Ventil nach einem der Ansprüche 1 bis 3, wobei sich der Haltevorsprung (21) parallel zu der Drehwelle (12) der Klappe (10) erstreckt.

5. Ventil nach Anspruch 4, wobei sich der Vorsprung (21) über eine Länge erstreckt, die im Bereich von 50 % bis 100 % der Gesamtlänge der Drehwelle (12) liegt.

6. Ventil nach einem der Ansprüche 1 bis 5, wobei die Zone des Vollabschnitts (3) der Dichtung (1), die mit dem Haltevorsprung (21) in Kontakt ist, eine Zone ist, die an die Öffnung (6) der Dichtung (1) angrenzt.

7. Ventil nach einem der Ansprüche 1 bis 6, wobei der Vollabschnitt (3) der Dichtung (1) mit einer Verstärkungszone versehen ist, die dazu bestimmt ist, den Abschnitt (3) zu versteifen, derart, dass er sich durch Wärmeausdehnung nicht verformt.

8. Ventil nach einem der Ansprüche 1 bis 7, wobei das Ende (24) des Haltevorsprungs (21), das mit dem Vollabschnitt (3) der Dichtung (1) in Kontakt ist, eben ist.

9. Ventil nach einem der Ansprüche 1 bis 8, wobei die Herstellung eines Kontakts zwischen dem Vorsprung (21) und dem Vollabschnitt (3) der Dichtung (1) ohne Verformung dieses Abschnitts (3) erfolgt.

10. Ventil nach einem der Ansprüche 1 bis 9, wobei der Kontakt zwischen dem Haltevorsprung (21) und dem Vollabschnitt (3) der Dichtung auf Höhe der Fläche (23) der Dichtung (1) erfolgt, die sich gegenüber jener befindet, mit der der zweite Teil (13) der Klappe (10) bündig ist, wenn die Klappe (10) in einer geschlossenen Position ist.

11. Ventil nach einem der Ansprüche 1 bis 10, wobei der Vorsprung (21) einteilig mit dem Element (20) des Körpers verwirklicht ist, wobei ein Teil dieses Elements (20) einen Teil der Leitung definiert und ein anderer Teil dieses Elements (20) einen Teil der äußeren Oberfläche des Körpers definiert.

## Claims

1. Engine control valve having a body that delimits an internal duct and comprising a flap (10) mounted in a pivoting manner by way of a pin (12), said flap (10) comprising a first part (11) and being able to pivot between an open position allowing gas to pass through the duct and a closed position preventing this passage and in which the flap (10) comes into contact with a gasket (1) inserted between two elements of the body of the valve, said gasket (1) having an external contour that externally surrounds the external contour of the flap (10) and said gasket comprising an opening (6) and a solid portion (3), said first part (11) closing off the opening (6) in the gasket (1) when the flap (10) is in a closed position, the flap (10) comprising a second part (13) that is separated from the first part (11) by the pin (12) of the flap (10), said second part being flush with the solid portion (3) when the flap is in a closed position, **characterized in that**
one of the two elements (20) of the body is provided with a supporting protuberance (21) that is positioned in the valve so as to be in contact with the solid portion (3) of the gasket (1).

2. Valve according to Claim 1, wherein the gasket (1) is inserted between the two elements (20) of the body at a peripheral region (2) of said gasket (1).

3. Valve according to Claim 1 or 2, wherein the supporting protuberance (21) protrudes from the element (20) of the body so as to be perpendicular to the plane defined by the solid portion (3) of the gasket (1).

4. Valve according to any one of Claims 1 to 3, wherein the supporting protuberance (21) extends parallel to the rotary pin (12) of the flap (10).

5. Valve according to Claim 4, wherein the protuberance (21) extends along a length of between 50% and 100% of the total length of the rotary pin (12).

6. Valve according to any one of Claims 1 to 5, wherein the region of the solid portion (3) of the gasket (1) which is in contact with the supporting protuberance (21) is a region which borders the opening (6) in said gasket (1).

7. Valve according to any one of Claims 1 to 6, wherein the solid portion (3) of the gasket (1) is provided with a reinforcing region intended to stiffen said portion (3) such that it does not deform by thermal expansion.

8. Valve according to any one of Claims 1 to 7, wherein the end (24) of the supporting protuberance (21) which is in contact with the solid portion (3) of the gasket (1) is flat.

9. Valve according to any one of Claims 1 to 8, wherein the protuberance (21) comes into contact with the solid portion (3) of the gasket (1) without causing any deformation of said portion (3).

10. Valve according to any one of Claims 1 to 9, wherein the contact between the supporting protuberance (21) and the solid portion (3) of the gasket is made at that face (23) of the gasket (1) that is opposite the one with which the second part (13) of the flap (10) is flush when said flap (10) is in a closed position.

11. Valve according to any one of Claims 1 to 10, wherein the protuberance (21) is made in one piece with said element (20) of the body, a part of this element (20) defining a part of the duct and another part of this element (20) defining a part of the external surface of the body.
